# EUROPEAN PATENT APPLICATION

(11) **EP 1 460 042 A2**
(43) Date of publication of application: **22.09.2004**
(21) Application number: 04251554.4
(22) Date of filing: 18.03.2004
(51) Int. Cl.: C02F 1/68, A23L 1/304, A23L 2/54

(54) **Methods for the production of potable mineral water**

(30) Priority: 18.03.2003 GB 0306073
(71) Applicant: Meffert, Uwe, Aberdeen, Hong Kong (CN)
(72) Inventor: Meffert, Uwe, Aberden (HK); Chan, Wing Hong, Kowloon Tong (HK)
(74) Representative: Lambert, Ian Robert

(57) **Abstract**

There is disclosed a process for producing magnesium containing potable mineral water comprising the steps of:
adding a magnesium containing salt to a water sample;
dissolving carbon dioxide in said water sample;
and optionally adding one or more carbonate containing compounds;
so as to provide potable water containing greater than 130 mg l⁻¹ of dissolved magnesium cations, greater than 650 mg l⁻¹ of bicarbonate, and having a pH between 6.0 and 8.0.

## Description

This invention relates to magnesium containing potable mineral water and the methods for the production thereof.

There is a great deal of current interest in various types of mineral water, particularly mineral waters which purport to provide a prophylactic or therapeutic effect, or otherwise enhance the well being of the imbiber of the water. Mineral waters contain differing concentrations of a variety of elements and chemical species. However, most mineral waters contain only rather low concentrations of magnesium. US 6,048,553 and US 6,328,997, the contents of which are hereby incorporated by reference, describe aqueous metal bicarbonate solutions which are intended to be imbibed for a number of health promoting purposes. Solutions having a magnesium cation concentration of up to 120 mg 1⁻¹ are exemplified. It is difficult to produce solutions having higher concentrations of magnesium cations owing to the relatively limited solubility of magnesium containing salts. By way of comparison, it is believed that the mineral water having the highest magnesium content of all mineral waters sold in France (Hepar (RTM) produced by Perrier Vittel, Vittel, France) has a magnesium cation concentration of 110 mg 1⁻¹.

The present inventors have recognised the efficacy of providing a potable mineral water having higher magnesium cation concentrations than the prior art solutions discussed above in combination with relatively high concentrations of bicarbonate anions. Additionally, the present inventors have recognised that the batch production method of US 6,048,553 and US 6,328,997 is not best suited for commercial production. The present invention provides - in spite of the limited solubility of precursor magnesium salts - convenient and practical methods for the production of magnesium containing mineral waters, including a continuous production method.

According to a first aspect of the invention there is provided a process for producing magnesium containing potable mineral water comprising the steps of:
adding a magnesium containing salt to a water sample;
dissolving carbon dioxide in said water sample;
and optionally adding one or more carbonate containing compounds;
so as to provide potable water containing greater than 130 mg1⁻¹ of dissolved magnesium cations, greater than 650 mg1⁻¹ of bicarbonate, and having a pH between 6.0 and 8.0.

In this way, a drinkable solution having high concentrations of beneficial magnesium cations and bicarbonate anions can be produced. Magnesium deficiency is implicated in the presence of a large number of conditions including cardiac and vascular diseases, diabetes, bone deterioration, renal failure, hypothyroidism and stress. Bicarbonate is essential for maintaining the acid-base balance of the blood. The mineral water of the present invention thereby helps to buffer lactic acid generated during exercise, and can reduce the acidity of dietary compounds whilst at the same time having a sufficiently high pH to support relatively high concentrations of dissolved magnesium cations. The mineral waters provided by the invention have a distinctive taste, which is found to be generally agreeable to imbibers of the waters. Another advantage is that clear solutions can be provided, even though the solubility of magnesium is relatively poor, and the magnesium cations are present in relatively high concentrations.

The water sample may be saturated with carbon dioxide.

Preferably, the magnesium containing salt is magnesium carbonate hydroxide.

The magnesium containing salt may be added to the water sample before carbon dioxide is dissolved in said water sample. In this instance, the step of adding the magnesium containing salt may comprise adding the magnesium containing salt to the water sample to produce a stock solution in which at least a portion of said magnesium containing salt is suspended in said water sample; and the process may further comprise the step of subsequently diluting the stock solution prior to the step of dissolving the carbon dioxide.

The potable water may contain greater than 150 mg1⁻¹ of dissolved magnesium cations, preferably greater than 170 mg1⁻¹ of dissolved magnesium cations, most preferably greater than 200 mg1⁻¹ of dissolved magnesium cations.

A potassium containing salt, preferably potassium carbonate, may be added to the water sample. The amount of the potassium containing salt added may be such as to provide potable water having dissolved potassium cations at a concentration of greater than 100 mg1⁻¹, preferably between 100 mg1⁻¹ and 150 mg1⁻¹, most preferably about 125 mg1⁻¹ . Other additives might be employed. For example, so-called "tissue salts" might be added . Tissue salts - originally postulated by Wilhelm Schussler in the 19th century - comprise twelve salts, which are widely held to, in combination, provide health benefits. The twelve "tissue salts" are: calcium phosphate; calcium sulphate; calcium fluoride; potassium phosphate; potassium sulphate; potassium chloride; sodium phosphate; sodium sulphate; sodium chloride; iron phosphate; magnesium phosphate; and silicon dioxide. Another additive which may be utilised is oxygen.

The potable water may contain greater than 1000 mg1⁻¹ of bicarbonate, preferably between 1000 mg1⁻¹ and 2000 mg1⁻¹, most preferably about 1500 mg1⁻¹.

The potable water may have a pH in the range of 6.5 to 7.7, preferably in the range 7.2 to 7.6.

According to a second aspect of the invention there is provided potable mineral water containing greater than 130 mg1⁻¹ of dissolved magnesium cations, greater than 650 mgl⁻¹ of bicarbonate, and having a pH in the range of 6.0 to 8.0.

The potable water may have a pH in the range of 6.5 to 7.7, preferably in the range of 7.2 to 7.6.

The potable water may contain greater than 150 mg1⁻¹ of dissolved magnesium cations, preferably greater than 170 mg1⁻¹, most preferably greater than 200 mg1 of dissolved magnesium cations.

The potable water may contain greater than 1000 mg1⁻¹ of bicarbonate, preferably between 1000 mg1⁻¹ and 2000 mg1⁻¹ , most preferably about 1500 mg1⁻¹ .

The potable water may be saturated with carbon dioxide.

The potable mineral water may comprise further additives so as to produce a drink of a desired type. The drink may be a soft drink. In this respect, it is highly advantageous that heat treatment steps required in the manufacture of soft drinks do not have a detrimental effect on the water. In particular, the magnesium cations remain in solution after such treatments. The drink may be a tea, such as a green tea or a herbal tea. Such teas are very usefully employed as sports drinks, having enhanced mineral content and also a unique taste.

According to a third aspect of the invention there is provided the use of potable mineral water according to the first aspect of the invention as drinking water. The mineral water may be in the form of a flavoured soft drink. The mineral water may be in the form of a tea, such as a green tea or a herbal tea.

According to a fourth aspect of the invention there is provided a continuous process for producing a magnesium containing potable mineral water comprising the steps of
adding a magnesium containing salt to a water sample to produce a stock solution in which at least a portion of said magnesium containing salt is dissolved in said water sample; and
transporting said stock solution to a mixing zone wherein said stock solution is diluted by mixing with an aqueous diluent to produce a diluted stock stream;
and optionally adding one or more carbonate containing compounds to either the stock solution or the diluted stock stream;
in which the carbon dioxide is dissolved in the stock solution and/or the diluted stock stream, and magnesium containing potable mineral water is continuously discharged by the process.

The diluted stock steam may be saturated with dissolved carbon dioxide.

The magnesium containing compound may be magnesium carbonate hydroxide.

The process may be performed so as to provide potable mineral water containing greater than 650 mg 1⁻¹ of bicarbonate and having a pH between 6.0 and 8.0

The process may be performed so as to provide potable water containing greater than 90 mg 1⁻¹ , preferably greater than 130 mg 1⁻¹, more preferably greater than 170 mg 1⁻¹, most preferably greater than 200 mg 1⁻¹ of dissolved magnesium cations.

A potassium containing salt, preferably potassium carbonate, may be added to the water sample. The amount of the potassium containing salt added may be such as to provide potable mineral water having dissolved potassium cations at a concentration of greater than 100 mg 1⁻¹, preferably between 100 mg 1⁻¹ and 150 mg 1⁻¹, most preferably about 125 mg 1⁻¹ .

The potable mineral water may contain greater than 1000 mg 1⁻¹ of bicarbonate, preferably between 1000 mg 1⁻¹ and 2000 mg 1⁻¹, most preferably about 1500 mg 1⁻¹.

The potable mineral water may have pH in the range of 6.5 to 7.7, preferably in the range of 7.2 to 7.6.

In a preferred embodiment:
the step of adding a magnesium salt to a water sample comprises providing at least a first and a second reservoir containing stock solutions; and
the step of transporting said stock solution comprises transporting stock solution from the first reservoir to the mixing zone, followed by transporting stock solution from the second reservoir to the mixing zone.

In this instance the first reservoir may be replenished by adding said magnesium containing salt to a water sample to produce stock solution in the first reservoir at a time when stock solution from the first reservoir is not being transported to the mixing zone, and the second reservoir may be replenished by adding said magnesium containing salt to a water sample to produce stock solution in the second reservoir at a time when stock solution from the second reservoir is not being transported to the mixing zone;
and the step of transporting stock solution from the second reservoir to the mixing zone may be followed by transporting stock solution from the replenished first reservoir to the mixing zone, which is followed by transporting stock solution from the replenished second reservoir to the mixing zone.

The diluted stock solution may be temporarily stored in a buffer storage zone.

Embodiments of magnesium containing potable mineral waters and methods for the production thereof will now be described with reference to the accompanying drawings, in which:-
- Figure 1: shows a schematic diagram of a first production process; and
- Figure 2: is a schematic design of a second production process.

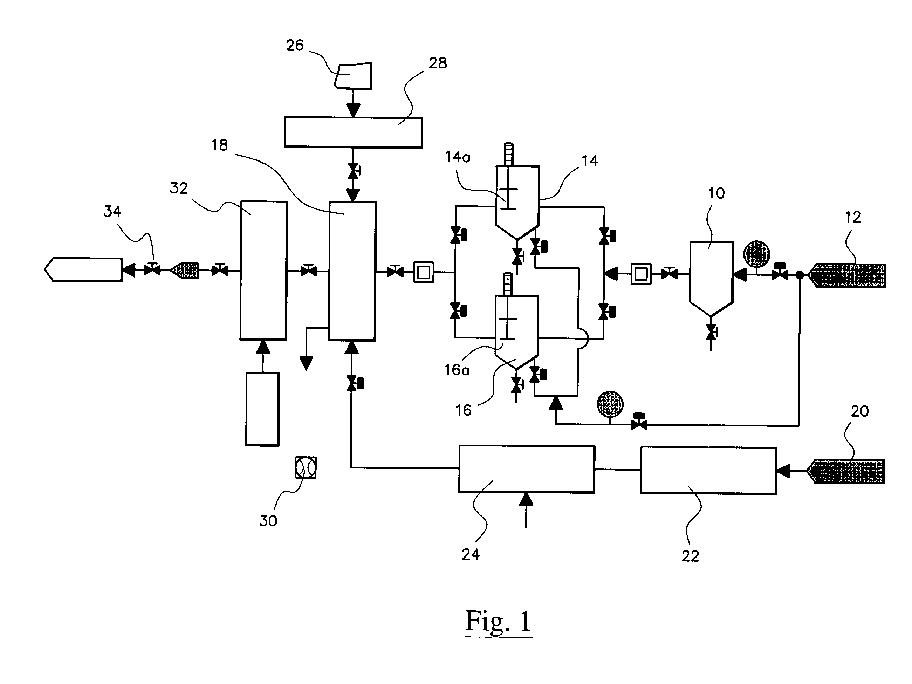

Figure 1 depicts a first embodiment of an apparatus and method for producing potable mineral water in accordance with the invention. In the method depicted in Figure 1, a stock solution containing a relatively large quantity of magnesium is first provided. This stock solution is subsequently diluted to provide a solution which has a relatively large concentration of magnesium cations. A supply of water is introduced to a tank 10 from a first water source 12. The tank 10 contains a predetermined amount of tissue salts. From the tank 10 the water, now containing dissolved tissue salts, is pumped into a tank 14, which tank 14 contains a predetermined quantity of a magnesium salt. The arrangement depicted in Figure 1 also comprises a further tank 16 which, optionally, might be used either in combination with or instead of the tank 14 for the purposes of producing stock solution. The tanks 14, 16 are provided with mixing means 14a, 16a which might comprise a stirring arrangement, ultrasonic device, or other suitable technology for the purpose of mixing the water with the magnesium salt. The stock solution produced by the mixing of the magnesium salt with the water supply is then pumped into a mixing zone 18, such as a mixing coil. In the mixing zone 18 the stock solution is diluted with a supply of water provided from a second water source 20. Optionally, the supply of water from the second water source 20 is passed through a filter 22, for example a 0.2mm filter, in order to remove particulates from the water supply. Additionally, or alternatively, the water supply from the second water source 20 can be treated, such as with ozone in an ozone treatment zone 24 in order to kill microorganisms present in the water supply. Once the stock solution has been diluted, the diluted solution is treated with carbon dioxide from a carbon dioxide source 26. Optionally the gaseous supply of carbon dioxide passes through a filter 28. Preferably, the diluted solution is saturated with carbon dioxide. The addition of CO₂ to the diluted solution increases the solubility of the magnesium containing salt by virtue of decreasing the pH of the diluted solution. Optionally, it is also possible to introduce oxygen to the diluted solution via an oxygen source 30. After dilution and treatment with carbon dioxide, the water solution is passed through a heat exchanger 32, in order to chill the solution, preferably to between 5 and 15°C, usually to about 10°C. Alternatively, or additionally, it is possible to pre-chill one or both of the supplies of water provided by the first and second sources of water 12,20. This is of particular relevance if oxygen is to be added to the solution. The chilled water solution then exits the production apparatus at tap 34, to be introduced to a suitable container such as a bottle or filler device. Initially, the mineral water solution may be somewhat milky, in which instance the bottle should be turned or otherwise agitated for a period of time, possibly up to twenty four hours, in order to produce a clear solution by assisting in the solubilisation of the magnesium salt.

In the first embodiment, the first source of water 12 supplies distilled water and the second source of water 20 supplies a mineral water. However, the invention is not limited in this regard and other forms of water might be utilised instead. It is preferred to introduce carbon dioxide to the solution by way of bubbling gaseous carbon dioxide through the water for a period of time, usually just a few minutes. However, carbon dioxide may be introduced in other ways such as, for example, through the use of dry ice. It should be noted that the purpose of the carbon dioxide treatment is to dissolve carbon dioxide in the solution in order to 1) increase the pH of the solution and 2) to assist in the production of bicarbonates anions. Typically, little or no gaseous CO₂ remains in the solution and thus the water is not fizzy. However, in principle, it is possible to produce fizzy mineral water by way of carbonation. The addition of tissue salts to the solution is an optional feature, and thus the tank 10 may be disposed with. A further optional, but preferred, feature is to provide a mineral water having a quantity of potassium cations present therein. This may be achieved by introducing an amount of a potassium containing salt, preferably potassium carbonate, to the solution. Most conveniently, an appropriate amount of the potassium containing salt is added to the solution at the same time that the magnesium containing salt is added, ie, at tank 14. It is preferred to use magnesium carbonate hydroxide, since this compound provides much improved results - particularly with respect to the attainment of high concentrations - in comparison to other magnesium containing compounds such as magnesium carbonate. It is believed that the relatively high solubility of magnesium carbonate hydroxide may be related to this observation.

Tables 1 and 2 describe the compositions of a number of examples of mineral waters produced using the method described with reference to Figure 1. In each example, magnesium carbonate hydroxide was used as the magnesium containing salt. In a typical, but non-limiting, production process, magnesium carbonate hydroxide and potassium carbonate in food quality powder form are added each at a rate from 1kg per 100 litres of water to 2kg per 100 litres of water. The weight ratio of magnesium hydroxide carbonate to potassium carbonate is typically in the range 1:1 to 2:1. In this way the stock solution is produced. Thereafter the stock solution is diluted through mixing with a diluting water source. Typically, a 20 fold dilution takes place. The skilled reader will appreciate that such a dilution is not a limiting feature of the invention, and that there are many combinations of magnesium salt and potassium salt feed rates and dilution factors. A typical, but non-limiting mineral water produced in accordance with the invention has the following analysis (in units of mg 1⁻¹ unless otherwise stated):
Magnesium 233, Potassium 115, Bicarbonate 1407, Calcium 7, Zinc 0.5, H₂SiO₃36, Iodine 0.02, Fluoride 0.3, Chloride 2, Sodium 1, TDS 2104, Hardness 980 ppm, pH 7.2 - 7.6.

**Table 1.**

| Compositions of Stock Solutions | | |
|---|---|---|
| Stock Solution | Mass of Magnesium Salt (mg) | Amount/Type of Water |
| A | 5204 (+4404 mg K ₂CO₃) | 500 ml carbonated |
| B | 10404 | 500 ml carbonated |
| C | 5204 (+2205 mg K₂CO₃) | 500 ml carbonated |
| D | 10408 (+2205 mg K₂CO₃) | 500 ml carbonated |
| E | 5204 (+2205 mg K₂CO₃) | 500 ml carbonated spring |
| F | 10408 (+2205 mg K₂CO₃) | 500 ml carbonated spring |

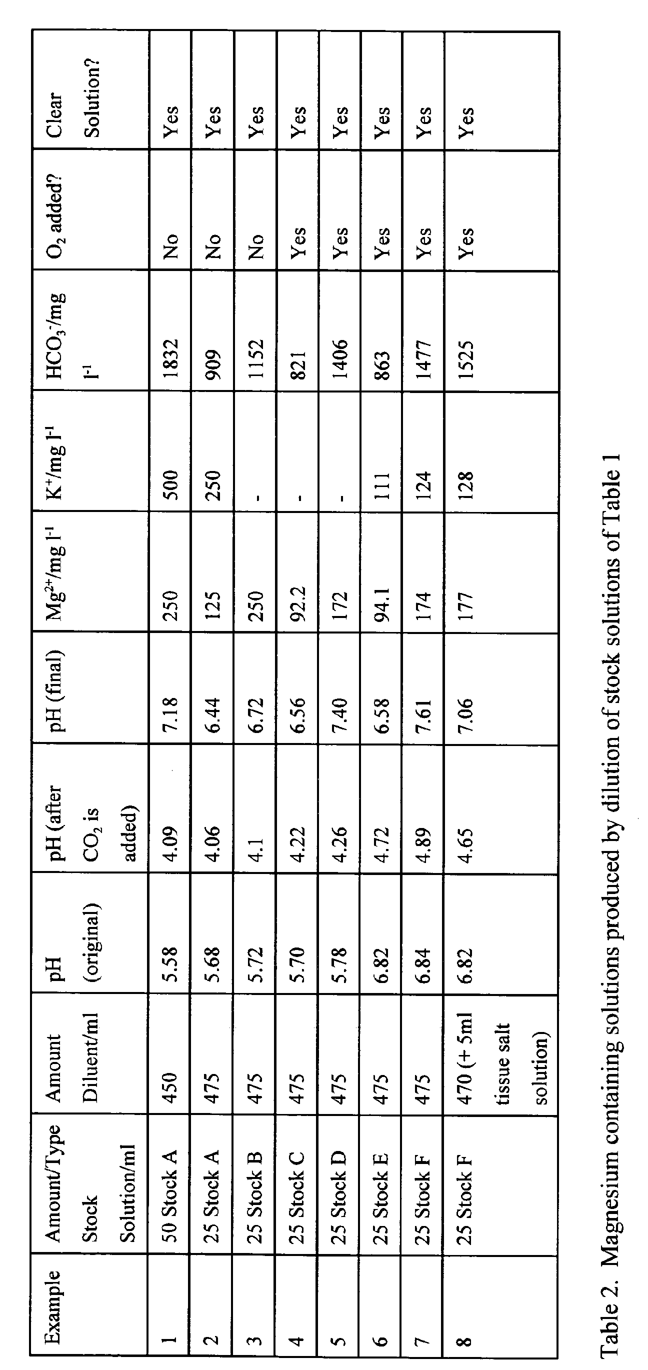

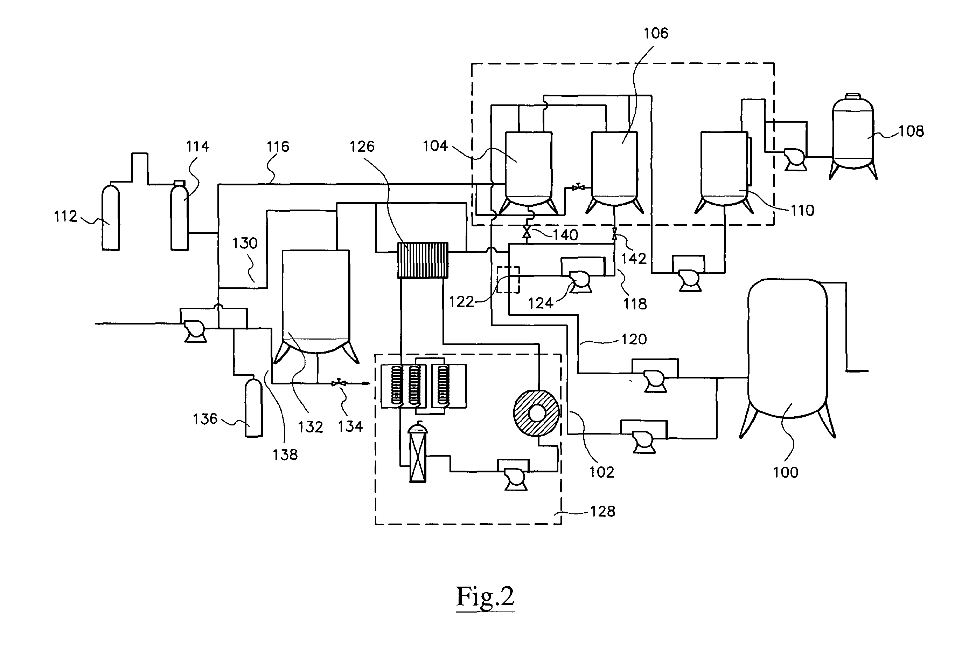

Figure 2 depicts a second embodiment of apparatus and method for producing potable mineral water in accordance with the invention. In the embodiment depicted in Figure 2 the potable mineral water is produced on a continuous basis. A first water source 100 supplies water via a supply line 102 to first and second mixing tanks 104, 106. An appropriate amount of magnesium containing salt, preferably magnesium carbonate hydroxide, is added to the water in tanks 104, 106 and is mixed therewith. A typical feed rate would be such as to provide 1 kilogram of magnesium carbonate hydroxide per 100 litres of water. Preferably, a potassium containing compound, most preferably potassium carbonate, is added to the water in the tanks 104, 106. Optionally, a second water source 108 supplies water to a third mixing tank 110, wherein tissue salts are added to the water and mixed therewith. The resulting tissue salt solution can be introduced to the first and second tanks 104, 106. In non-limiting embodiments the first water source 100 contains spring water and the second water source 108 contains distilled water. Gaseous carbon dioxide is supplied from a carbon dioxide tank 112. Carbon dioxide from the tank 112 is passed through a filter 114 and is supplied via a supply line 116 to the tanks 104, 106. In a typical example the carbon dioxide is added to the tanks 104, 106 at about three bar pressure. The addition of carbon dioxide assists in dissolving the magnesium containing salt and in the production of bicarbonate anions.

In this way a stock solution of the magnesium containing compound is produced. Typically only a portion of the magnesium containing compound is dissolved in the stock solution with the remainder remaining in suspension, giving the stock solution a cloudy appearance. The stock solution is extracted from the tank 104 via a supply line 118, and conveyed to a mixing zone 122. Additionally, a supply line 120 supplies an aqueous diluent solution from the first water source 100 to the mixing zone 122. At the mixing zone 122, the aqueous diluent is mixed with the extracted stock solution. A dosing pump 124 ensures that the stock solution is mixed with the aqueous diluent at the correct dosing ratio, which is typically in the range 5 to 10%. This mixing produces a diluted stock solution which is subsequently passed through a chilling zone 126. The chilling zone may be a heat exchange surface in connection with a heat exchange system 128. Upstream of the chilling zone 126 gaseous carbon dioxide is added to the diluted stock solution via a supply line 130 so as to ensure that the diluted stock solution is saturated with dissolved carbon dioxide. Following this further treatment with carbon dioxide, the diluted stock solution is introduced to a buffer tank 132. The potable magnesium containing mineral water produced by this process is discharged from the buffer tank 132 at tap 134. In some embodiments, the mineral water is oxygenated using oxygen from an oxygen tank 136, the oxygen being supplied over a supply line 138. It should be noted that chilling of the diluted stock solution is not a mandatory requirement of the process. The principal purpose of the chilling zone 126 is to chill the diluted stock solution so as to allow more oxygen to be absorbed into the solution: typically around 50 - 60 mg 1⁻¹ of oxygen is dissolved in the water when the diluted stock solution is chilled to 10°C. However, it is perfectly feasible, and possibly preferable, to chill the diluted stock solution even in instances where oxygen is not dissolved into the mineral water, since chilled diluted stock solution is able to support higher concentrations of dissolved carbon dioxide. For example, the concentrations of carbon dioxide in saturated solutions are approximately 41 mg 1⁻¹ at 10°C and 31 mg 1⁻¹ at 20°C.

When the stock solution from the tank 104 is exhausted, the connection between the tank 104 and mixing zone 122 is broken by closing valve 140, and instead valve 142 is opened. Thus, stock solution from tank 106 is extracted therefrom via the supply line 118 and conveyed to the mixing zone 122. The supply of stock solution to the mixing zone 122 may be interrupted during this changeover period, but the use of the buffer tank 132 ensures that mineral water is supplied continuously at tap 134. Whilst stock solution from the tank 106 is extracted, the tank 104 is replenished with stock solution by way of mixing the magnesium containing compound with the appropriate amount of water. Then, when tank 106 is exhausted of stock solution, stock solution can be extracted from the replenished tank 104. Tank 106 can be replenished with stock solution whilst stock solution is extracted from tank 104 and vice versa. In this way, batch wise production of stock solution is used to provide continuous production of mineral water. The third mixing tank 110 can be replenished with tissue salt solution at an appropriate juncture.

The provision of further tanks for storing stock solution might be contemplated. It may be possible to provide an extraction system which permits extraction of stock solution from more than one stock solution containing tank at a given time, thereby permitting a phased change-over between tanks for the purposes of stock solution extraction, eg, stock solution might be extracted from a first tank, then from both a first tank and a second tank, and then from the second tank only, etc. A further possibility is to produce the stock solution on a continuous basis by adding the magnesium containing compound to a water supply at an appropriate feed-rate.

The continuous production method described in relation to Figure 2 can be used to produce magnesium containing mineral waters of the type described above, such as in relation to Table 2 above. Whilst it is preferred to use the continuous production method to produce magnesium containing mineral waters having a concentration of dissolved magnesium cations greater than 130 mg 1⁻¹, it is possible to use the method to produce magnesium containing mineral waters having lower concentrations of magnesium cations. From the foregoing, it will be apparent that magnesium containing mineral waters may be produced which contain enhanced levels of dissolved oxygen and/or tissue salts. It is also possible to produce magnesium containing mineral waters having a variety of other additives such as sugars or other sweeteners or flavourings. A variety of soft drinks can be produced. Preferred embodiments of soft drinks are teas, such as green tea and herbal teas. It is conceivable that a hard drink, ie, an alcoholic drink, might be produced. Although it is considered to be an advantageous feature of the invention that mineral water having the desirable pHs described above with high concentrations of magnesium cations dissolved therein can be produced by way of adding carbon dioxide to the solutions, the use of further pH adjusting additives might be contemplated.

## Claims

1. A process for producing magnesium containing potable mineral water comprising the steps of
adding a magnesium containing salt to a water sample;
dissolving carbon dioxide in said water sample;
and optionally adding one or more carbonate containing compounds;
so as to provide potable water containing greater than 130 mg 1⁻¹ of dissolved magnesium cations, greater than 650 mg 1⁻¹ of bicarbonate, and having a pH between 6.0 and 8.0.

2. A process according to claim 1 in which the water sample is saturated with carbon dioxide.

3. A process according to claim 1 or claim 2 in which the magnesium containing salt is added to the water sample before carbon dioxide is dissolved in said water sample.

4. A process according to claim 3 in which:
the step of adding the magnesium containing salt comprises adding the magnesium containing salt to the water sample to produce a stock solution in which at least a portion of said magnesium containing salt is dissolved in said water sample;
and further comprising the step of subsequently diluting the stock solution.

5. Potable mineral water containing greater than 130 mg 1⁻¹ of dissolved magnesium cations, greater than 650 mg 1⁻¹ of bicarbonate, and having a pH in the range 6.0 to 8.0.

6. Potable mineral water according to claim 5 having a pH in the range of 6.5 to 7.7, preferably in the range 7.2 to 7.6.

7. Potable mineral water according to claim 5 or claim 6 containing greater than 150 mg 1⁻¹ of dissolved magnesium cations, preferably greater than 170 mg 1⁻¹, most preferably greater than 200 mg 1⁻¹ of dissolved magnesium cations.

8. Potable mineral water according to any of claims 5 to 7 containing greater than 1000 mg 1⁻¹ of bicarbonate, preferably between 1000 mg 1⁻¹ and 2000 mg 1⁻¹, most preferably about 1500 mg 1⁻¹.

9. Potable mineral water according to any of claims 5 to 8 further comprising dissolved potassium cations at a concentration of greater than 100 mg 1⁻¹, preferably between 100 mg 1⁻¹ and 150 mg 1⁻¹, most preferably about 125 mg 1⁻¹.

10. Use of potable mineral water according to any of claims 5 to 9 as drinking water.

11. A continuous process for producing a magnesium containing potable mineral water comprising the steps of
adding a magnesium containing salt to a water sample to produce a stock solution in which at least a portion of said magnesium containing salt is dissolved in said water sample; and
transporting said stock solution to a mixing zone wherein said stock solution is diluted by mixing with an aqueous diluent to produce a diluted stock stream;
and optionally adding one or more carbonate containing compounds to either the stock solution or the diluted stock stream;
in which carbon dioxide is dissolved in the stock solution and/or the diluted stock stream, and magnesium containing potable water is continuously discharged by the process.

12. A process according to claim 11 in which:
the step of adding a magnesium salt to a water sample comprises providing at least a first and a second reservoir containing stock solution; and
the step of transporting said stock solution comprises transporting stock solution from the first reservoir to the mixing zone, followed by transporting stock solution from the second reservoir to the mixing zone.

13. A process according to claim 12 wherein the first reservoir is replenished by adding said magnesium containing salt to a water sample to produce stock solution in the first reservoir at a time when stock solution from the first reservoir is not being transported to the mixing zone, and the second reservoir is replenished by adding said magnesium containing salt to a water sample to produce stock solution in the second reservoir at a time when stock solution from the second reservoir is not being transported to the mixing zone;
and in which the step of transporting stock solution from the second reservoir to the mixing zone is followed by transporting stock solution from the replenished first reservoir to the mixing zone, which is followed by transporting stock solution from the replenished second reservoir to the mixing zone.

14. A process according to any of claims 11 to 13 in which the diluted stock solution is temporarily stored in a buffer storage zone.
